# EUROPEAN PATENT APPLICATION

(11) **EP 4 704 275 A1**
(43) Date of publication of application: **04.03.2026**
(21) Application number: 25197889.6
(22) Date of filing: 25.08.2025
(51) Int. Cl.: H02G 3/06, H02G 3/04

(54) **FLAME PROOF CABLE GLAND WITH INSPECTABLE QUICK CONNECTOR**

(30) Priority: 29.08.2024 IN 202411065250
(71) Applicant: Eaton Intelligent Power Limited, Dublin D04 Y0C2 (IE)
(72) Inventor: Tarade, Sujit, 414105 Maharashtra (IN); Feather, Mark, 62269 O'Fallon, IL (US); Khokle, Himanshu, 440009 Maharashtra (IN)
(74) Representative: Schwan Schorer & Partner mbB

(57) **Abstract**

A cable gland assembly includes a hub body, wherein an exterior portion of a second end of the hub body includes a multistart threaded portion. An intermediate body having a first end that is disposed within the hub body, and a second end having an annular projection disposed around an exterior portion of the second end of the intermediate body proximate to the second end of the hub body, the second end having external threads. A union nut defining an internal passage that receives the intermediate body and the second end of the hub body, a first end of the union nut threadedly engages the multistart threaded portion of the hub body. Tightening the union nut along the multistart threaded portion secures the intermediate body in the hub body. A gland nut having a first end that threadedly engages the external threads of the second end of the intimidate body.

## Description

### FIELD OF INVENTION

The present disclosure relates generally to a cable gland. More particularly, the present disclosure relates to a cable gland having a union nut that is configured to quick release.

### BACKGROUND

Cable glands are used for terminating cables in hazardous and nonhazardous environments. More specifically, cable glands generally provide a means for terminating cables, such as unarmored cables (e.g., TC-type) and armored cables, at junction boxes, control centers, panelboards, enclosures, structures, and the like. Known cable glands are used to seal the junction between a cable and a device or a structure into which the cable is extending.

Additionally, existing cable gland assemblies may be assembled from several components. At various times, the cable assembly may need to be disassembled or reassembled, particularly for inspection purposes or for applying sealant. During disassembly, the numerous components of a conventional cable gland may come apart, including those that do not need to separate for purposes of the disassembly. This makes disassembly and reassembly of the cable gland assembly more complex, time consuming, and error prone. Furthermore, environmental debris may enter the cable gland from mating points of certain components as conventional cable gland assemblies may not provide a robust enough seal between certain components. This may lead to degradation of the cable or conductor and reduce the quality of the cable gland.

### SUMMARY OF THE INVENTION

In one embodiment, a cable gland assembly includes a hub body having a first end configured to threadedly couple to a structure and a second end opposite the first end, wherein an exterior portion of the second end of the hub body includes a multistart threaded portion, the hub body defining an internal passage. The cable gland assembly further includes an intermediate body extending along an axis, the intermediate body having a first end and a second end, the intermediate body defining an internal passage that is configured to receive a cable, the first end of the intermediate body is disposed within the internal passage of the hub body, the second end extending axially past the second end of the hub body, the second end further having an annular projection disposed around a first exterior portion of the second end of the intermediate body proximate to the second end of the hub body, the second end further having external threads extending axially past the annular projection along a second exterior portion of the intermediate body. The cable gland assembly further includes a union nut having a first end and a second end opposite the first end, the union nut defining an internal passage that receives the intermediate body and the second end of the hub body, the first end of the union nut threadedly engages the multistart threaded portion of the hub body, the second end of the union nut having a shoulder that abuts against the annular projection of the intermediate body, wherein tightening the union nut along the multistart threaded portion of the hub body secures the intermediate body in the internal passage of the hub body. The cable gland assembly further includes a gland nut having a first end and a second end opposite the first end, the gland nut defining an internal passage configured to receive the cable, the first end of the gland nut threadedly engages the external threads of the second end of the intimidate body, the second end of the gland nut having a shoulder.

In another embodiment, a cable gland assembly includes a hub body extending along an axis having a first end configured to threadedly couple to a structure and a second end opposite the first end, the hub body defining an internal passage along the axis that is configured to receive a portion of a cable, the second end of the hub body including an aperture extending perpendicular to the axis into the internal passage of the hub body. The cable gland assembly further includes an intermediate body having a first end and a second end opposite the first end, the intermediate body defining an internal passage configured to receive a portion of the cable, wherein the first end of the intermediate body is received in the hub body, the first end of the intermediate body having a blind hole, wherein the blind hole is aligned with the hub body aperture and extends perpendicular to the axis into the intermediate body. The cable gland assembly further includes an engagement pin configured to be inserted into the hub body aperture and intermediate body blind hole to secure the intermediate body in the hub body. The cable gland assembly further includes a gland nut having a first end and an opposite second end, the gland nut defining an internal passage configured to receive a portion of the cable, the first end of the gland nut receives the second end of the intermediate body such that the first end of the gland nut threadedly engage the threads of the second end of the intermediate body, the first end of the gland nut fits within the internal passage of the hub body.

In yet another embodiment, a cable gland assembly includes a hub body having a first end configured to threadedly couple to a structure and a second end opposite the first end, wherein the second end of the hub body includes an aperture that retains a ball bearing, the hub body defining an internal passage. The cable gland assembly further includes an intermediate body extending along an axis, the intermediate body having a first end and a second end, the intermediate body defining an internal passage that is configured to receive a cable, the first end of the intermediate body is disposed within the internal passage of the hub body, the first end further having a channel that is aligned with aperture in the hub body and the channel receives the ball bearing through the aperture in the hub body, the second end of the intermediate body extends axially past the second end of the hub body, the second end of the intermediate body having external threads. The cable gland assembly further includes a union collar having a first end and a second end opposite the first end, wherein the union collar is substantially ring shaped such that the union collar includes an axially exterior surface and an axially interior surface, the axially interior surface of the union collar defines an internal passage that receives the second end of the hub body, the axially interior surface includes a projection that engages the ball bearing when the union collar is in a first position and disengages the ball bearing when the union collar is in a second position. The cable gland assembly further includes a gland nut having a first end and a second end opposite the first end, the gland nut defining an internal passage configure to receive the cable, the first end of the gland nut is configured to threadedly engage the external threads of the second end of the intermediate body, the second end of the gland nut having a shoulder.

In still another embodiment, a cable gland assembly includes a hub body having a first end configured to threadedly couple to a structure and a second end opposite the first end, wherein an exterior portion of the second end of the hub body includes a multistart threaded portion, the hub body defining an internal passage. The cable gland assembly further includes an intermediate body extending along an axis, the intermediate body having a first end and a second end, the intermediate body defining an internal passage, the first end of the intermediate body is disposed within the internal passage of the hub body, the second end extending axially past the second end of the hub body, the second end further having a collar, the intermediate body having further having internal threads along a portion of the internal passage proximate to the second end of intermediate body. The cable gland assembly further includes an elbow body having a first end and a second end, the elbow body further having an angular bend disposed between the first end and second end of the elbow body, the elbow body defining an internal passage, the first end of the elbow body threadedly engages the internal threads of the intermediate body, the second end of the elbow body includes external threads. The cable gland assembly further includes a union nut having a first end and a second end opposite the first end, the union nut defining an internal passage that receives the first end of the intermediate body and the second end of the hub body, the first end of the union nut threadedly engages the multistart threaded portion of the hub body, the second end of the union nut having a shoulder that abuts against the intermediate body collar, wherein tightening the union nut along the multistart threaded portion of the hub body secures the intermediate body in the internal passage of the hub body. The cable gland assembly further includes a gland nut having a first end and a second end opposite the first end, the gland nut defining an internal passage, the first end of the gland nut threadedly engages the external threads of the second end of the elbow body, the second end of the gland nut having a shoulder.

### BRIEF DESCRIPTION OF DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale, and the proportion of certain elements may be exaggerated for the purpose of illustration.
**Figure 1** is a cross sectional view of one embodiment of a cable gland assembly,
**Figure 2** is a cross sectional view of one embodiment of an exemplary hub body and union nut with multi start threaded portions,
**Figure 3** is a side view of the exemplary hub body of **Figure 2****,**
**Figure 4** is a second end perspective view of the exemplary hub body of **Figure 2****,**
**Figure 5** is a cross sectional view of one embodiment of a cable gland assembly including a grub screw,
**Figure 6** is a cross sectional view of one embodiment of a cable gland assembly including a spring-loaded plunger,
**Figure 7** is a cross sectional view of one embodiment of a cable gland assembly including a union collar,
**Figure 8** is a side view of the cable gland assembly of **Figure 7****,** and
**Figure 9** is a cross sectional view of one embodiment of a cable gland assembly including an elbow body.

### DETAILED DESCRIPTION

Known flame proof cable glands include a hub body for threadedly engaging with a structure, an intermediate body for threadedly engaging with the hub body, and a gland nut for threadedly engaging with the intermediate body. Therefore, such configurations securing a cable within the cable gland require an installer to torque three different components. Additionally, some known cable glands need to be disassembled or reassembled. During disassembly, the numerous components of known cable glands may come apart, including those that do not need to separate for purposes of the disassembly. This makes disassembly and reassembly of the cable gland assembly more complex, time consuming, and error prone. Additionally, environmental debris may enter the cable gland from mating points of certain components as known cable gland may not provide a robust enough seal between certain components. This may lead to degradation of the cable and reduce the quality of the cable gland. One instance where existing cable glands may need to be disassembled is to apply a sealant in the hub body. Applying the sealant requires the union nut and gland nut to be disassembled to access the internal passage of the hub body. This process is time consuming and if the fittings are not replaced properly, it can lead to system failures. The present disclosure overcomes these deficiencies and other deficiencies in the prior art.

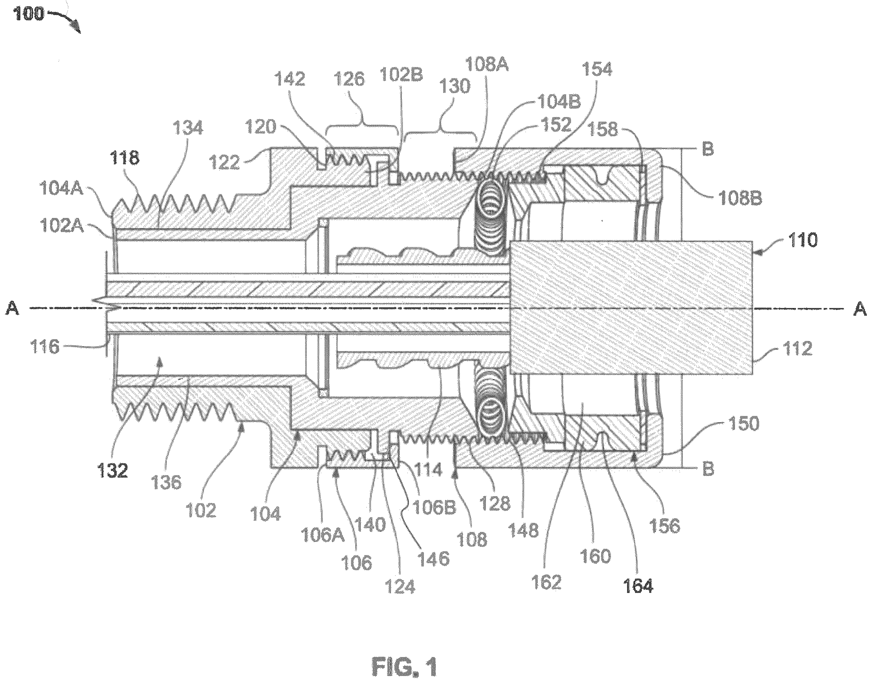

A first exemplary embodiment of a cable gland assembly that extends along an axis-A is depicted in **Figure 1****.** The cable gland assembly **100,** more specifically, is a flame proof cable gland assembly that is configured to seal the junction between a cable **110** and a device or a structure into which the cable **110** is extending. In the illustrated embodiment, the cable **110** includes a cable jacket **112** that is disposed around a cable armor **114,** which houses internal wires or cables **116.** As explained in more detail below, the cable gland assembly **100** includes a union nut **106** that is threadedly coupled to a hub body **102** with a quick connector such that the union nut **106** can be uncoupled from the hub body **102** within one turn of the union nut **106.** The other components of the cable gland assembly **100,** also described below, are illustrative and may be of other designs or constructions.

The cable gland assembly **100** includes a hub body **102,** an intermediate body **104,** a union nut **106,** and a gland nut **108,** wherein the cable gland assembly **100** is configured to secure a portion of a cable **110** therein. The hub body **102** has a first end **102A** with external connection threads **118** for threading into a device, an enclosure, or other structure. The hub body **102** further includes a second end **102B** having a multistart threaded portion **120** that includes multistart threads for threadedly mating with the union nut 106. The hub body **102** further includes an internal passage that extends through the first end **102A** and the second end **102B** of the hub body **102.** The hub body **102** may be formed from a metal, such as aluminum, stainless steel, or brass. The hub body **102** further includes a tool coupling portion **122** (e.g., a hexagonal or other polygonal structure) to aid in torquing the hub body **102** onto the structure.

The hub body **102** receives the intermediate body **104** in the internal passage of the hub body **102.** The intermediate body **104** has a first end **104A** and a second end **104B** opposite of the first end **104A.** The first end **104A** of the intermediate body **104** is disposed within the internal passage of the hub body **104.** The second end **104B** of the intermediate body **104** extends axially outwards past the second end **102B** of the hub body **102.** The second end **104B** of the intermediate body **104** includes an annular projection **124** disposed around a first portion **126** of the exterior surface of the intermediate body **104.** The annular projection **124** is disposed on the second end **104B** of the intermediate body **104** at a location that is proximate to the second end **102B** of the hub body **102.** The second end **104B** of the intermediate body **104** further includes external threads **128** disposed around a second portion **130** of the exterior surface of the intermediate body **104.** The external threads **128** of the second end **104B** of the intermediate body **104** are configured to mate with and couple to the gland nut **102.** The second portion **130** of the exterior surface of the intermediate body **104** is axially rearward of the first portion **126** of the exterior surface of the intermediate body **104** such that the annular projection **124** is positioned between the second end **102B** of the hub body **102** and the external threads **128** of the intermediate body **104.**

The intermediate body **104** further includes an internal passage **132** that extends through the first and second end **104A, 104B** of the intermediate body **104.** The internal passage **132** is configured to receive a portion of the cable **110** therein. The intermediate body **104** may be formed from a metal, such as aluminum, stainless steel, or brass. The cable gland assembly **100** may further include a flamepath **134.** The flamepath **134** is a thin passage disposed between the interior surface of the hub body **102** and the exterior surface of the intermediate body **104.** The flamepath **134** is configured to permit hot or volatile gasses that are contained within the structure to slowly dissipate from the structure. The flamepath **134** alleviates buildup of gasses within the structure, which if not alleviated, could lead to catastrophic failure of the system. Furthermore, the flamepath **134** may be configured such that it allows the hot gasses that are dissipating through the flamepath **134** to cool as the gasses travel through the flamepath **134** and out of the cable gland assembly **100.**

The cable gland assembly **100** may further include a compound chamber **136** disposed within the intermediate body **104** proximate to the first end **104A** of the intermediate body **104.** The compound chamber **136** is configured to receive a curable sealing compound (also referred herein as a compound sealant). When cured, the sealing compound serves as a sealant within the cable gland assembly **100** that restricts the passage of gases, vapor, or flames into and through the cable gland assembly **100.** Suitable examples of sealing compounds include, but are not limited to, epoxy fillers and Chico^{®} sealing compounds commercially available from Eaton Corporation PLC.

The union nut **106** includes a first end **106A,** and a second end **106B** opposite of the first end **106A.** The union nut **106** further includes an internal passage **140** that extends through the first and second ends **106A, 106B.** The first end of the union nut **106A** includes a multistart threaded portion **142.** The multistart threaded portion **142** includes multistart threads that are configured to mate and couple to the multistart threads **120** of the hub body **102.** The union nut **106** multistart threads **142** are disposed along an axially inner surface **144** of the union nut **106.** The multistart threaded portion **142** of the union nut **106** and the multistart threaded portion **120** of the hub body **102** are configured as quick connectors such that the union nut **106** can be tightened to threadedly engage the hub body **102** and loosened to threadedly disengage from the hub body **102** in one or fewer turns. In alternate embodiments, the union nut **106** can be tightened to threadedly engage the hub body **102** and loosened to threadedly disengage from the hub body **102** in two or fewer turns. In alternate embodiments, the multistart threaded portions **120, 142** of the hub body **102** and union nut **106** may be comprised of standard threaded portions.

The second end **106B** of the union nut **106** includes a shoulder **146** such that the opening at the first end **106B** of the union nut **106** is wider than the opening at the second end **106B** of the union nut **106.** The internal passage **140** of the union nut **106** receives the intermediate body **104** such that the annular projection **124** of intermediate body **104** abuts the union nut shoulder **146.** The shoulder **146** restricts the axial movement of the intermediate body **104** along the axis-A such that intermediate body **104** can only be inserted into the internal passage **140** of the union nut **106** until the annular projection **124** makes contact with the shoulder **146.** The shoulder **146** further restricts the axial movement of the intermediate body **104** such that tightening the multistart threaded portion **142** of the union nut **106** to the multistart threaded portion **120** of the hub body **102** secures the intermediate body **104** in the internal passage of the hub body **102.** The intermediate body **104** cannot be removed from the internal passage of the hub body **102** unless and until the union nut **106** is uncoupled from the hub body **102** such that the shoulder **146** of the union nut **106** does not abut the intermediate body annular projection **124.**

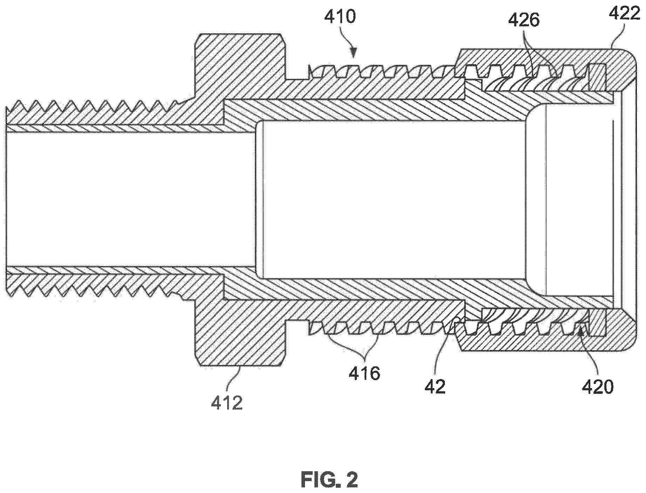

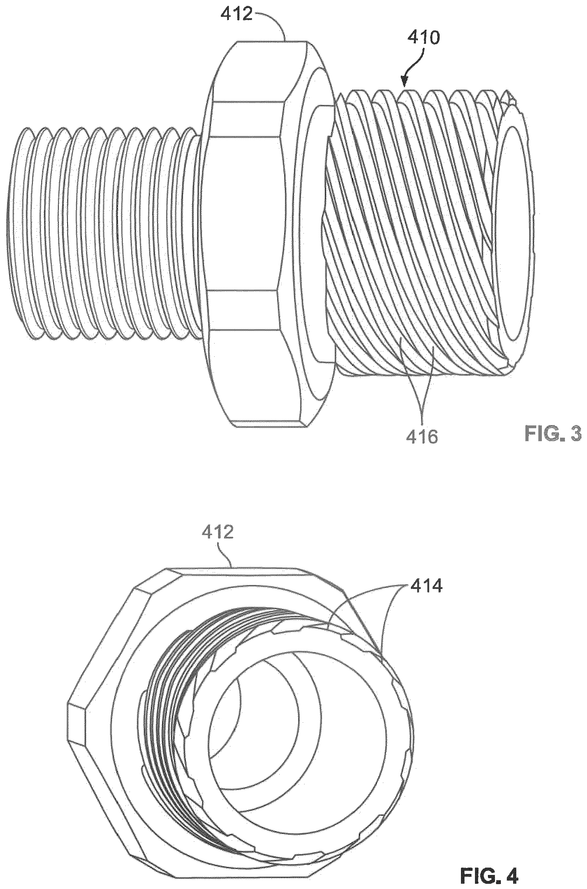

Referring now to **Figures 2-4****,** which depict exemplary multistart threaded portions **410, 420** of an exemplary hub body **412** and an exemplary union nut **422.** While there are slight variations between the exemplary hub body 412 and exemplary union nut 422 compared to the hub body 102 and union nut 106 of Figure 1, these components function the same. The multistart threads **410, 420** are configured to reduce the number of rotations to torque the union nut **422** to the hub body **412.** The exemplary multistart threaded portions **410, 420** are comprised of 1"-10 (ten threads per inch) threaded portions. The multistart threaded portions **410, 420** include ten start leads **414** that correspond with the threads **416, 426 of** the ten threads per inch. In this configuration, each rotation of the union nut **420** translates 1 inch.

Referring again to **Figure 1****,** the gland nut **108** includes a first end **108A,** and a second end **108B** opposite of the first end **108A.** The gland nut **108** further includes an internal passage that extends through the first and second ends **108A, 108B** of the gland nut **108.** The gland nut internal passage is configured to receive a portion of the cable 110 therethrough. The first end **108A** of the gland nut **108** includes an opening that is sized to receive the second end **104B** of the intermediate body **104.** The first end **108** of the gland nut **108A** includes internal threads **148** that are configured to mate with and threadedly engage the external threads **128** of the second end **104B** of the intermediate body **104.** The second end **108B** of the gland nut **108** includes a shoulder **150** such that the opening at the first end **108A** is wider than the opening at the second end **108B.** The gland nut may be formed from a metal, such as aluminum, stainless steel, or brass.

The cable gland assembly **100** further includes a garter spring **152,** a sleeve **154,** a bushing **156,** and a washer **158** disposed within the internal passage of the gland nut **108.** The garter spring **152** is positioned between the second end **104B** of the intermediate body **104** and the sleeve **154.** The sleeve **154** is positioned between the garter spring **152** and the bushing **156.** The sleeve **154** is configured to engage the garter spring **152** and the bushing **156** such that the sleeve **154** axially compresses the garter spring **152** and the bushing **156.** The sleeve **154** may be comprised of or formed from, for example, plastic or metal, such as aluminum, stainless steel, or brass. The washer **158** is disposed between the bushing **156** and the shoulder **150** of the gland nut **108** proximate to the second end **108B** of the gland nut **108.** The washer **158** distributes the load applied by the shoulder **150** of the gland nut **108** when the cable gland assembly **100** is assembled. The washer **158** may be comprised of or formed from. for example, plastic, such as a polyamide.

When the cable gland assembly is assembled, the garter spring **152** is compressed between the second end **104B** of the intermediate body 104 and the sleeve **154.** When compressed, the garter spring **152** engages and surrounds the cable armor **114** to create a grounding connection. Additionally, the garter spring **152** may be configured to act as an armor stop which limits the insertion of the cable jacket **112** and the cable armor **114** of the cable **110** in the cable gland assembly **100** by stripping the cable jacket **112** and the cable armor **114** back to expose the internal wires or cables **116.** The garter spring **152** may be formed from metal, such as stainless steel with copper flash coating.

The bushing **156** includes a bushing body **160** having a generally annular shape with an interior surface defining a bushing opening **162** extending through first and second ends of the bushing body **160A, 160B.** A rib **164** is disposed on the interior surface of the bushing body. The rib **164** extends around the axis-A and extends radially inward from the interior surface toward the axis-A. In the illustrated embodiment, the rib **164** is a continuous annulus extending along the interior surface. The rib **164** may be disposed in a midplane extending through the bushing body **160** transverse to the axis-A at a location generally midway between the first and second ends of the bushing body **160A, 160B.** The rib **164** may be disposed at other locations along the axis-A of the bushing body **160.** The rib **164** has a suitable cross-sectional shape for engaging and sealing around the cable **110** received in the cable gland assembly **100.**

The cable **110** is secured in the cable gland assembly **100** by the garter spring **152** and the bushing **156.** The cable gland assembly **100** is configured such that the cable **110** remains secured in the intermediate body **104** and the gland nut **108** even when the union nut **106** is uncoupled form the hub body **102.** As discussed above, when the gland nut is threadedly coupled to the intermediate body **104,** the gland nut **108** secures a portion of the cable **100** in the intermediate body **104** and the gland nut **108** by compressing the cable **110** in the garter spring **152** and the bushing **156.** Therefore, so long as the gland nut **108** is threadedly coupled to the intermediate body **104,** then the garter spring **152** and bushing **156** remain in a compressed state such that the cable **110** is secured therein. This allows the union nut **106** to be uncoupled from the cable gland assembly **100** without compromising the securement of the cable **110.**

After the union nut **106** is uncoupled form the hub body 102, then the intermediate body **104** can be removed from the internal passage of the hub body **102.** Once the intermediate body **104** is removed from the internal passage of the hub body **102,** an operator can apply the compound sealant or inspect previously applied compound sealant in the compound chamber **136** of the internal passage **132** of the intermediate body **104.** Since the intermediate body **104** is received in the hub body **103** without fasteners or threads, then an operator only needs to untorque the union nut **106** to remove the intermediate body **104** to apply the compound sealant or inspect previously applied sealant.

In one embodiment, the cable gland assembly **100** has a 1/2 trade size fitting for use with 0.50 inch cables. The cable gland assembly **100** has an across corner width B-B of less than or equal to 1.24 inches with a sealing range of 0.50 - 0.78 inches. The cable gland assembly is an improvement over conventional cable glands because to achieve a similar sealing range, the conventional cable glands have an across corner width that is greater than 1.24 in (inches).

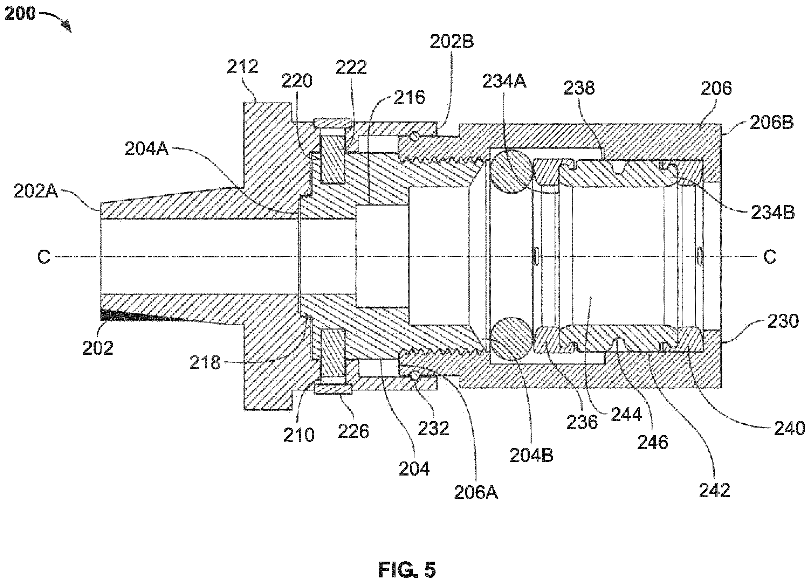

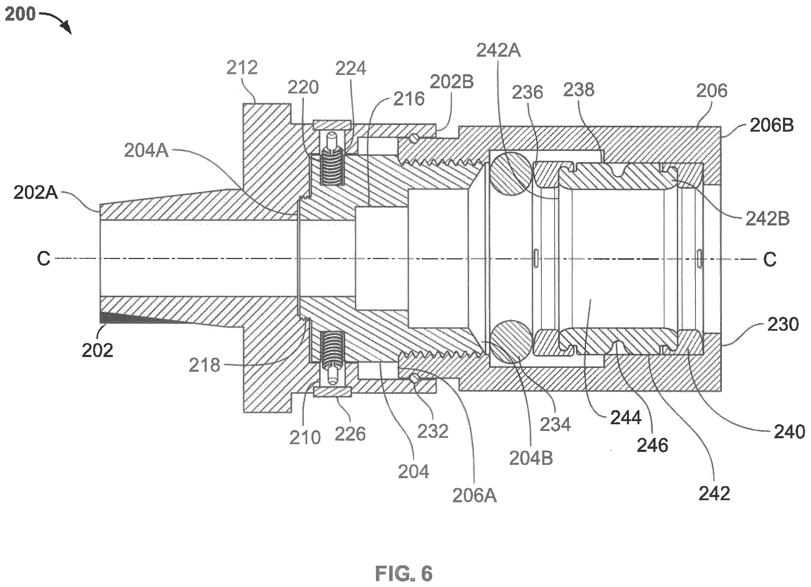

A second exemplary embodiment of a cable gland assembly that extends along an axis-C is depicted in Figures 5 and 6. The cable gland assembly **200** includes a hub body **202,** an intermediate body **204,** and a gland nut **206,** wherein the cable gland assembly **200** is configured to secure a portion of a cable therein. The hub body **202** has a first end **202A,** and a second end **202B** that is opposite the first end. The hub body **202** further includes an internal passage that extends through the first end **202A** and the second end **202B** of the hub body **202**. The first end **202A** of the hub body **202** is configured to threadedly couple to a device, an enclosure, or other structure. The hub body **202** further includes a second end **202B** having an aperture **210** extending perpendicular to the axis-C into the internal passage of the hub body **202.** The hub body **202** may be formed from a metal, such as aluminum, stainless steel, or brass. The hub body **202** may further include a tool coupling portion **212** (e.g., a hexagonal or other polygonal structure) to aid in torquing the hub body **202** onto the structure.

The hub body **202** receives the intermediate body **204** in the internal passage of the hub body **202.** The intermediate body **204** has a first end **204A,** and a second end **204B** opposite of the first end **204A.** The first end **204A** of the intermediate body **204** is disposed within the internal passage of the hub body **202.** The second end **204B** of the intermediate body **204** extends axially outwards past the second end **202B** of the hub body **202.** The second end **204B** of the intermediate body **204** includes external threads **214** for threadedly coupling to the gland nut **206.** The intermediate body **204** further includes an internal passage **216** that extends through the first and second end **204A, 204B** of the intermediate body **204.** The internal passage **216** is configured such that the internal passage **216** may receive a portion of a cable therein.

The first end **204A** of the intermediate body **204** mates with the internal passage of the hub body **202** at a mating point **218.** The mating point **218** may be configured such that the mating point **218** comprises a spigot joint where a portion of the first end **204A** of the intermediate body **204** is resistively retained within the internal passage of hub body **202.** The first end **204A** of the intermediate body **204** and the hub body **202** internal passage may further be configured to threadedly engage one another at the mating point **218.** The first end **204A** of the intermediate body **204** and the hub body **202** internal passage may include corresponding single 1/2 (one half) or 1/4 (one fourth) threads at the mating point **218** to threadedly engage one another.

The first end **204A** of the intermediate body **204** further includes a blind **hole 220** that extends perpendicular to the axis-C into the intermediate body **204.** The blind hole **220** is positioned on the intermediate body **204** such that the blind hole **220** is aligned with the hub body aperture **210.** The hub body aperture **210** and the intermediate body blind hole **220** receives an engagement pin **222, 224** that secures the intermediate body to the hub body. The intermediate body may be formed from a metal, such as aluminum, stainless steel, or brass.

In the **Figure 5** embodiment, the engagement pin **222, 224** is a grub screw. The hub body aperture **210** and the intermediate body blind hole **220** may be configured to receive the grub screw **222.** The hub body aperture **210** and intermediate body blind hole **220** may threadedly engage the grub screw **222.** The grub screw **222** may include a plurality of threads that mate and fasten to the threads of the hub body aperture **210** and intermediate blind hole **220.** Fastening the grub screw **222** to the hub body aperture **210** and intermediate blind hole **220** secures the intermediate body **204** to the hub body **202.**

In the **Figure 6** embodiment, the engagement pin **222, 224** is a spring-loaded plunger **224.** The hub body aperture **210** and the intermediate body blind hole **220** may be configured to receive the spring-loaded plunger **224.** The hub body aperture **210** and intermediate body blind hole **220** may resistively retain the spring-loaded plunger **224.** Inserting the spring-loaded plunger **224** into the hub body aperture **210** and intermediate blind hole **220** secures the intermediate body **204** to the hub body **202.**

The cable gland assembly further includes an elastomer ring **226** that is disposed around the hub body **202.** The elastomer ring **226** covers the hub body aperture **210** to prevent direct access to the engagement pin **222, 224.** The elastomer ring **226** further prevents debris or other contaminates from entering the hub body aperture **210.** The elastomer ring **226** may further be configured to resistively retain the spring-loaded plunger **224.**

The cable gland assembly may further include a curable sealing compound disposed within the internal passage **216** of the intermediate body **204** proximate to the first end **204A** of the intermediate body **204.** When cured, the sealing compound serves as a sealant within the cable gland assembly **200** that restricts the passage of gasses, vapor, or flames into and through the cable gland assembly **200.**

The gland nut **206** includes a first end **206A** and a second end **206B** opposite of the first end **206A.** The gland nut **206** further includes an internal passage that extends through the first and second ends **206A, 206B** of the gland nut **206.** The gland nut **206** internal passage is configured to receive a portion of the cable therethrough. The first end **206A** of the gland nut **206** includes an opening that is sized to receive the second end **204B** of the intermediate body **204.** The first end **206A** of the gland nut **206** includes internal threads **228** that are configured to mate with and threadedly engage the external threads **214** of the second end **204B** of the intermediate body **204.** The second end **206B** of the gland nut **206** includes a shoulder **230** such that the opening at the first end **206A** is wider than the opening at the second end **206B.** The gland nut **206** may be formed from a metal, such as aluminum, stainless steel, or brass. The second end **202B** of the hub body **202** is sized such that the first end **206A** of the gland nut **206** fits within the internal passage of the hub body **202.** The cable gland assembly **200** may further include an O-ring **232** disposed between the first end **206A** of the gland nut **206** and the second end **202B** of the hub body **202.** The O-ring **232** is configured to resistively retain the first end **206A** of the gland nut **206** within the internal passage of the hub body **202** at the second end **202B** of the hub body **202.**

The cable gland assembly **200** may further includes a garter spring **234,** a sleeve **236,** a bushing **238,** and a washer **240** disposed within the internal passage of the gland nut **206.** The garter spring **234** is positioned between the second end **204A** of the intermediate body **204** and the sleeve **236.** The sleeve **236** is positioned between the garter spring **234** and the bushing **238.** The sleeve **236** is configured to engage the garter spring **234** and the bushing **238** such that the sleeve **236** axially compresses the garter spring **234** and the bushing **238.** The sleeve **238** may be formed from plastic or metal, such as aluminum, stainless steel, or brass. The washer **240** is disposed between the bushing **238** and the shoulder **230** of the gland nut **206** proximate to the second end **206B** of the gland nut **206.** The washer **240** distributes the load applied by the shoulder **230** of the gland nut **206** when the cable gland assembly **200** is assembled. The washer **240** may be comprised of or formed from. for example, plastic, such as a polyamide.

When the cable gland assembly **200** is assembled, the garter spring **234** is compressed between the second end **204A** of the intermediate body **204** and the sleeve **236.** When compressed, the garter spring **234** engages and surrounds the cable to create a grounding connection. The garter spring **234** may comprise or be formed from, for example, metal, such as stainless steel with copper flash coating.

The bushing **238** may comprise a bushing body **242** having a generally annular shape with an interior surface defining a bushing opening **244** extending through first and second ends **242A, 242B** of the bushing body **242.** A rib **246** is disposed on the interior surface of the bushing body **242.** The rib **246** extends around the axis-A and extends radially inward from the interior surface toward the axis-C. In the illustrated embodiment, the rib **246** is a continuous annulus extending along the interior surface. The rib **246** may be disposed in a midplane extending through the bushing body **242** transverse to the axis-C at a location generally midway between the first and second ends **242A, 242B** of the bushing body **242.** The rib **246** may be disposed at other locations along the axis-C of the bushing body **246.** The rib **246** has a suitable cross-sectional shape for engaging and sealing around the cable received in the cable gland assembly **100.**

The cable is secured in the cable gland assembly **200** by the garter spring **234** and the bushing **238.** The cable gland assembly **200** is configured such that the cable remains secured in the intermediate body **204** and the gland nut **206** even when the engagement pin **222, 224** is uncoupled from the hub body **202** and the intermediate body **204.** As discussed above, when the gland nut **206** is threadedly coupled to the intermediate body **204,** the gland nut **206** secures a portion of the cable in the internal passage of the gland nut **206** and the intermediate body **204** by compressing the cable in the garter spring **234** and the bushing **238.** Therefore, so long as the gland nut **206** is threadedly coupled to the intermediate body **204,** then the garter spring **234** and bushing **238** remain in a compressed state such that the cable is secured therein. This allows the engagement pin **222, 224** to be uncoupled from the cable gland assembly without compromising the securement of the cable. After the engagement pin **222, 224** is uncoupled from the hub body **202,** then the intermediate body **204** can be removed from the hub body **202.** Once the intermediate body **204** is removed from the hub body **202,** an operator can apply the compound sealant or inspect previously applied compound sealant in the internal passage **216** at the first end **204A** of the intermediate body **204.**

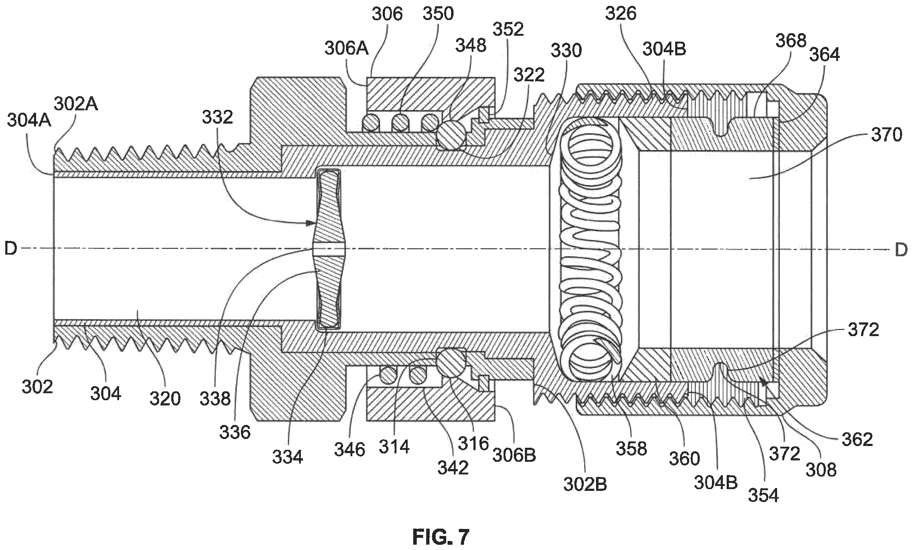

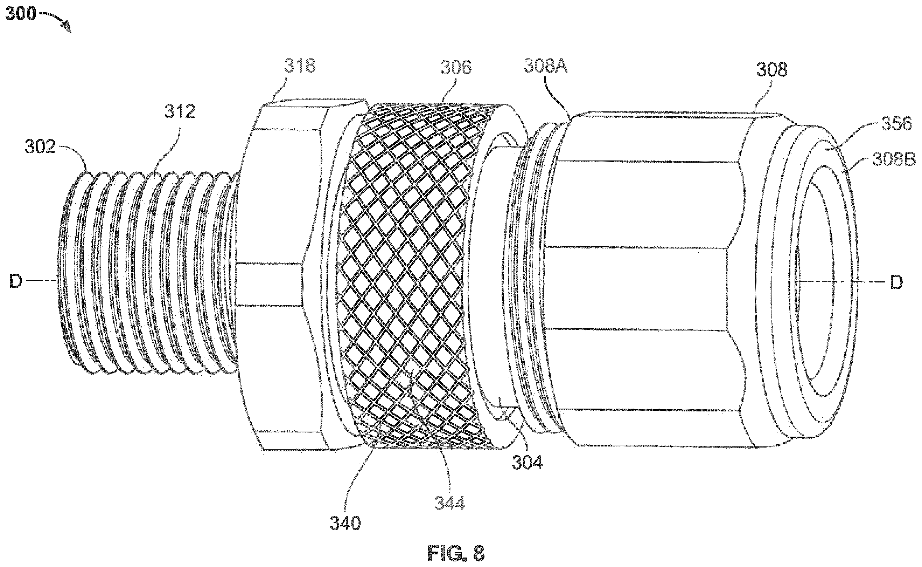

A third exemplary embodiment of a cable gland assembly **300** that extends along an axis-D is depicted in **Figures 7** and **8****.** The cable gland assembly **300** includes a hub body **302,** an intermediate body **304,** a union collar **306,** and a gland nut **308,** wherein the cable gland assembly **300** is configured to secure a portion of a cable **310** therein. The hub body **302** has a first end **302A,** and a second end **302B** opposite to the first end **302A.** The hub body **302** further includes an internal passage that extends through the first end **302A** and the second end **302B** of the hub body **302.** The first end **302A** of the hub body **302** includes external connection threads **312** for threadedly coupling the hub body to a device, an enclosure, or other structure. The hub body **302** further includes a second end **302B** having an aperture **314** that receives a ball bearing **316.** The aperture **314** extends through the hub body **302** such that the aperture **314** is in fluid communication with the internal passage of the hub body **302.** The hub body **302** may be formed from a metal, such as aluminum, stainless steel, or brass. The hub body **302** further includes a tool coupling portion **318** (e.g., a hexagonal or other polygonal structure) to aid in torquing the hub body **302** onto the structure.

The hub body **302** receives the intermediate body **304** in the internal passage of the hub body **302.** The intermediate body **304** has a first end **304A,** and a second end **304B** opposite of the first end **304A.** The intermediate body **304** further includes an internal passage **320** that extends through the first and second end **304A, 304B** of the intermediate body **304.** The first end **304A** of the intermediate body **304** is disposed within the internal passage of the hub body **302.** The second end **304B** of the intermediate body **304** extends axially outwards past the second end **302B** of the hub body **302.** The second end **304B** of the intermediate body **304** includes a channel **322** disposed at a first position **324** on the exterior surface of the intermediate body **304.** The channel **322** is disposed at the first position **324** of the exterior surface of the intermediate body **304** such that that the channel **322** aligns with the aperture **314** in the hub body **302** when the intermediate body **304** is disposed in the hub body **302** internal passage. The channel **322** is configured such that it receives the ball bearing **316** through the aperture **314.** The second end **304B** of the intermediate body **304** further includes external threads **326** disposed at a second position **328** of the exterior surface of the intermediate body **304.** The external threads **326** of the second end **304B** of the intermediate body **304** are configured to mate with and threadedly couple to the gland nut **308.** The second position **328** of the exterior surface is axially rearward of the first position **324** of the exterior surface such that the channel **322** is positioned between the tool coupling portion **318** of the hub body **302** and the external threads **326** of the second end **304B** of the intermediate body **304.** The internal passage **320** of the intermediate body **304** further includes a step transition **330** proximate to the second end **304B** of the intermediate body **304.**

The intermediate body **304** may further include a brush dam **332** disposed within the internal passage of the intermediate body **304.** The brush dam **332** includes an annular filament holder **334** and a plurality of individual filaments **336** that extend radially inward from the annular filament holder **334** to define an average inner radial extent that is less than the radius defined by the annular filament holder **334.** The free ends of the of the filament **334** define a longitudinal opening **338** extending through the brush dam **336.** The filaments **334** may be comprised of or formed form any suitable material such as but not limited to plastic, nylon, polypropylene, polystyrene, Tampico, horsehair, metal wire, etc. The filaments **334** are generally flexible or resiliently deflectable along the length of the filaments **334.**

The brush dam **332** is configured to permit the cable **310** to pass through the opening **338** while still creating a barrier between the first end **304A** and second end **304B** of the intermediate body **304** to inhibit the flow of a curable sealing compound that is disposed within the intermediate body **304.** The sealing compound applied in the internal passage **320** of the intermediate body **304** is positioned axially forward of the brush dam **332.** When cured, the sealing compound serves as a sealant within the cable gland assembly **300** that restricts passage of gases, vapor, or flames into and through the cable gland assembly **300.**

The union collar **306** includes a first end **306A,** and a second end **306B** opposite of the first end **306A.** The union collar **306** is substantially ring shaped such that the union collar **306** includes an axially exterior surface **340** and an axially interior surface **342.** The union collar **306** may include a grip feature **344** disposed along the axially exterior surface **340.** The axially interior surface **342** of the union collar **306** defines an internal passage **346** that extends through the first and second ends of the union collar **306A, 306B.** The internal passage **346** of the union collar **306** is sized such that the internal passage **346** receives the second end **302A** of the hub body **302.** The axially interior surface **342** of the union collar **306** further includes a projection **348** that extends perpendicular to the axis-D from the axially interior surface.

The union collar **306** is axially slidable between a first position and a second position. In the first position the projection **348** is aligned with the hub body aperture **314** and the intermediate body channel **322** such that the projection **348** engages the ball bearing **316.** In the first position, the ball bearing **316** is retained in the aperture **314** and the channel **322** to resistively retain the intermediate body **304** in the hub body **302.** The ball bearing **316** and projection **348** act in unison as a retention pin to resist axial movement of the intermediate body **304** to retain the intermediate body **304** in the internal passage of the hub body **302.** In the second position, the union collar **306** is pulled axially towards the tool coupling portion **318** of the hub body **302** to disengage the projection **348** from the ball bearing **316.** Disengaging the projection **348** from the ball bearing **316** allows the ball bearing **316** to release from the hub body aperture **314** and the intermediate body channel **322.** When the ball bearing **316** is released, it allows the intermediate body **304** to be removed from the internal passage of the hub body **302.**

The union collar **306** may further include a retention spring **350** disposed between the tool coupling portion **318** of the hub body **302** and projection **348** of the axially interior surface **342** of the union collar **306.** The retention spring **350** is configured to resistively retain the union collar **306** in the first position such that the retention spring **350** resists axial movement of the union collar **306** towards the first end **302A** of the hub body **302.** The retention spring **350** is compressed in the second position by the axial movement of the projection **348.** The union collar **306** may further include a retaining ring **352** disposed at the second end of the union collar **306.** The retaining ring **352** is configured to prevent the ball bearing **316** from falling out of the union collar **306** when in the second position. The union collar **306** may be formed from a metal, such as aluminum, stainless steel, or brass.

The gland nut **308** includes a first end **308A,** and a second end **308B** opposite of the first end **308A.** The gland nut **308** further includes an internal passage that extends through the first and second ends **308A, 308B** of the gland nut **308.** The gland nut **308** internal passage is configured to receive a portion of the cable **310** therethrough. The first end **308A** of the gland nut **308** includes an opening that is sized to receive the second end **304B** of the intermediate body **304.** The first end **308A** of the gland nut **308** includes internal threads **354** that are configured to mate with and threadedly engage the external threads **326** of the second end **304B** of the intermediate body **304.** The second end **308B** of the gland nut **308** includes a shoulder **356** such that the opening at the first end **308A** is wider than the opening at the second end **308B.** The gland nut **308** may be formed from a metal, such as aluminum, stainless steel, or brass.

The cable gland assembly **300** further includes a garter spring **358,** a sleeve **360,** a bushing **362,** and a washer **364** disposed within the internal passage of the gland nut **308.** The garter spring **358** is positioned between the step transition **330** of the internal passage **320** of the intermediate body **304** and the sleeve **360.** The sleeve **360** is positioned between the garter spring **358** and the bushing **362.** The sleeve **360** is configured to engage the garter spring **358** and the bushing **362** such that the sleeve **360** axially compresses the garter spring **358** and the bushing **362.** The sleeve **360** may be comprised of or formed from, for example, plastic or metal, such as aluminum, stainless steel, or brass. The washer **364** is disposed between the bushing **362** and the shoulder **356** of the gland nut **308** proximate to the second end **308B** of the gland nut **308.** The washer **364** distributes the load applied by the shoulder **356** of the gland nut **308** when the cable gland assembly **300** is assembled. The washer **364** may be comprised of or formed from, for example, plastic, such as a polyamide.

When the cable gland assembly **300** is assembled, the garter spring **358** is compressed between the step transition **330** of the intermediate body **304** and the sleeve **360.** When compressed the garter spring **358** engages and surrounds the cable **310** to create a grounding connection. The garter spring **358** may be formed from metal, such as stainless steel with copper flash coating.

The bushing **362** may comprise a bushing body **368** having a generally annular shape with an interior surface defining a bushing opening **370** extending through first and second ends of the bushing body **368A, 368B.** A rib **372** is disposed on the interior surface of the bushing body **368.** The rib **372** extends around the axis-D and extends radially inward from the interior surface toward the axis-D. In the illustrated embodiment, the rib **372** is a continuous annulus extending along the interior surface. The rib **372** may be disposed in a midplane extending through the bushing body **368** transverse to the axis-D at a location generally midway between the first and second ends of the bushing body **368.** The rib **372** may be disposed at other locations along the axis-D of the bushing body **368.** The rib **372** has a suitable cross-sectional shape for engaging and sealing around the cable 310 received in the cable gland assembly **300.**

The cable 310 is secured in the cable gland assembly **300** by the garter spring **358** and the bushing **366.** The cable gland assembly **300** is configured such that the cable 310 remains secured in the intermediate body **304** and the gland nut **308** even when the union collar **306** releases the ball bearing **316** in the second position. As discussed above, when the union collar **306** is in the first position the intermediate body **304** is retained in the internal passage of the hub body **302** by the ball bearing **316.** However, the cable **310** in retained in the internal passage of the gland nut **308,** independent of the union collar **306,** by compressing the cable **310** in the garter spring **358** and the bushing **366.** Therefore, so long as the gland nut **308** is threadedly coupled to the intermediate body **304,** then the garter spring **358** and bushing **366** remain in a compressed state such that the cable **310** is secured therein. This allows the union collar **306** to be moved to the second position to release the ball bearing **316** from the hub body aperture **314** and intermediate body channel **322** without compromising the securement of the cable **310.** After the ball bearing **316** is released then the intermediate body **304** can be removed from the hub body **302.** Once the intermediate body **304** is removed from the hub body **302,** an operator can apply the compound sealant or inspect previously applied compound sealant in the internal passage **320** at the first end **304A** of the intermediate body **304.**

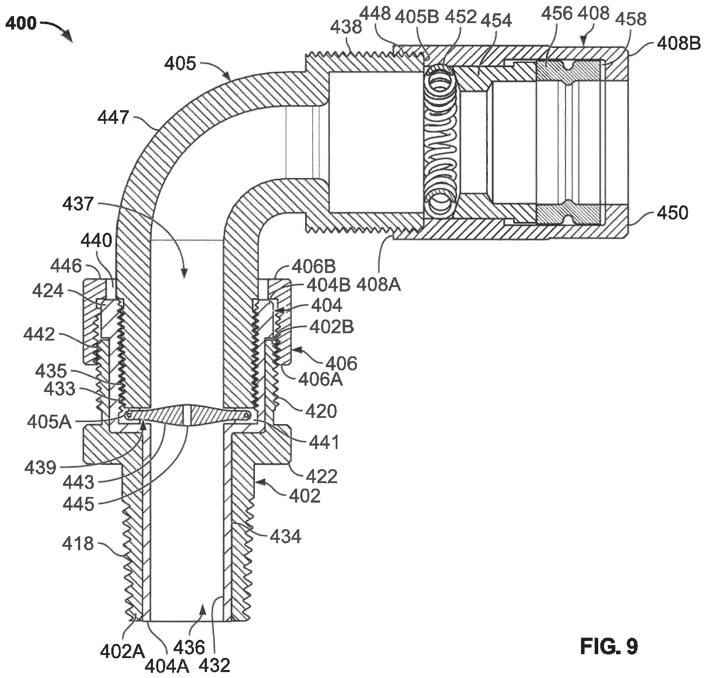

Referring now to **Figure 9****,** which depicts a fourth exemplary embodiment of a cable gland assembly **400.** The cable gland assembly **400** includes a hub body **402,** an intermediate body **404,** an elbow body **405,** a union nut **406,** and a gland nut **408,** wherein the cable gland assembly **400** is configured to secure a portion of a cable therein. The hub body **402** has a first end **402A** with external connection threads **418** for threading into a device, an enclosure, or other structure. The hub body **402** further includes a second end **402B** having a multistart threaded portion **420** that threadedly mates with the union nut **406.** The hub body **402** further includes an internal passage that extends through the first end **402A** and the second end **402B** of the hub body **402.** The hub body **402** may be formed from a metal, such as aluminum, stainless steel, or brass. The hub body **402** further includes a tool coupling portion **422** (e.g., a hexagonal or other polygonal structure) to aid in torquing the hub body **402** onto the structure.

The hub body **402** receives the intermediate body **404** in the internal passage of the hub body **402.** The intermediate body **404** has a first end **404A** and a second end **404B** opposite of the first end **404A.** The first end **404A** of the intermediate body **404** is disposed within the internal passage of the hub body **404.** The second end **404B** of the intermediate body **404** extends axially outwards past the second end **402B** of the hub body **402.** The intermediate body **404** further includes an internal passage **432** that extends through the first and second end **404A, 404B** of the intermediate body **404.** The internal passage **432** further includes an internal threaded portion **433.** The internal passage **432** is configured to receive a portion of a cable therein. The intermediate body **404** may be formed from a metal, such as aluminum, stainless steel, or brass.

The internal passage **432** of the intermediate body **404** receives a first end **405A** of the elbow body **405** through the second end **404B** of the intermediate body **404.** The first end **405A** of the elbow body **405** includes external threads **435** that engage the internal threaded portion **433** of the intermediate body **404.** The elbow body **405** includes a second end **405B** and an internal passage **437** extending therethrough. The elbow body includes an angular bend **447** disposed between the first and second ends **405A, 405B,** such that the elbow body **447** is curved. The second end **405B** of the elbow body **405B** further includes external threads **438.** As depicted in **Figure 9****,** the angular bend **447** is a right-angle, *i.e.,* a ninety-degree (90°) bend, such that the first end **405A** and the second end **405B** extend in orthogonal axes. In further embodiments, the angular bend **447** is an acute-angle bend at an angle between zero-degrees (0°) and ninety-degrees (90°). In even further embodiments, the angular bend 447 is an obtuse-angle bend at an angle between ninety-degrees (90°) and one-hundred-eighty-degrees (180°). The elbow body **405** may be formed from a metal, such as aluminum, stainless steel, or brass. The elbow body **405** is particularly advantageous in situations where space is limited around or along the structure that receives an exemplary cable gland assembly. Additionally, the elbow body **405** is advantageous for relieving stress on a cable that would otherwise extend angularly from a linear cable gland assembly.

The cable gland assembly **400** further includes a flamepath **434.** The flamepath **434** is a thin passage disposed between the interior surface of the hub body **402** and the exterior surface of the intermediate body **404.** Moreover, the cable gland assembly **400** includes a compound chamber **436** disposed within the intermediate body **404** proximate to the first end **404A** of the intermediate body **404.** The compound chamber **436** is configured to receive a curable sealing compound (also referred herein as a compound sealant). When cured, the sealing compound serves as a sealant within the cable gland assembly **400** that restricts the passage of gases, vapor, or flames into and through the cable gland assembly **400.** Suitable examples of sealing compounds include, but are not limited to, epoxy fillers and Chico^{®} sealing compounds commercially available from Eaton Corporation PLC.

The intermediate body **404** may further include a brush dam **439** disposed within the internal passage **432** of the intermediate body **304.** The brush dam **439** includes an annular filament holder 441 and a plurality of individual filaments **443** that extend radially inward from the annular filament holder **441** to define an average inner radial extent that is less than the radius defined by the annular filament holder **441.** The free ends of the of the filament **443** define an opening **445** extending through the brush dam **439.** The filaments **443** may be comprised of or formed form any suitable material such as but not limited to plastic, nylon, polypropylene, polystyrene, Tampico, horsehair, metal wire, etc. The filaments **443** are generally flexible or resiliently deflectable along the length of the filaments **443.** The brush dam **439** permits a portion of a cable to pass through the opening **445** while still creating a barrier between the first end **404A** of the intermediate body **404** and the first end **405A** of the elbow body **405** to inhibit the flow of the curable sealing compound that is disposed within the compound chamber **436.**

The union nut **406** includes a first end **406A,** and a second end **406B** opposite of the first end **406A.** The union nut **406** further includes an internal passage **440** that extends through the first and second ends **406A, 406B.** The first end of the union nut **406A** includes a multistart threaded portion **442.** The multistart threaded portion **442** includes multistart threads that are configured to mate and couple to the multistart threads **420** of the hub body **402.** The union nut **406** multistart threads **442** are disposed along an axially inner surface **444** of the union nut **406.** The multistart threaded portion **442** of the union nut **406** and the multistart threaded portion **420** of the hub body **402** are configured as quick connectors such that the union nut **406** can be tightened to threadedly engage the hub body **402** and loosened to threadedly disengage from the hub body **402** in one or fewer turns. In alternate embodiments, the union nut **406** can be tightened to threadedly engage the hub body **402** and loosened to threadedly disengage from the hub body **402** in two or fewer turns. In alternate embodiments, the multistart threaded portions **420, 442** of the hub body **402** and union nut **406** may be comprised of standard threaded portions.

The second end **406B** of the union nut **406** includes a shoulder **446** such that the opening at the first end **406B** of the union nut **406** is wider than the opening at the second end **406B** of the union nut **406.** The internal passage **440** of the union nut **406** receives the intermediate body **404** and elbow body **405** such that a collar **424** of intermediate body **404** abuts the union nut shoulder **446.** The union nut shoulder **446** restricts the axial movement of the intermediate body **404.** The shoulder **446** further restricts the axial movement of the intermediate body **404** such that tightening the multistart threaded portion **442** of the union nut **406** to the multistart threaded portion **420** of the hub body **402** secures the intermediate body **404** in the internal passage of the hub body **402.** The intermediate body **404** cannot be removed from the internal passage of the hub body **402** unless and until the union nut **406** is uncoupled from the hub body **402** such that the union nut shoulder **446** does not abut the intermediate body collar **424.**

Referring still to **Figure 9****,** the gland nut **408** includes a first end **408A,** and a second end **408B** opposite of the first end **408A.** The gland nut **408** further includes an internal passage that extends through the first and second ends **408A, 408B** of the gland nut **408.** The gland nut internal passage is configured to receive a portion of the cable therethrough. The first end **408A** of the gland nut **408** includes an opening that is sized to receive the second end **405B** of the elbow body **405.** The first end **408A** of the gland nut **408** includes internal threads **448** that are configured to mate with and threadedly engage the external threads **438** of the second end **405B** of the elbow body **405.** The second end **408B** of the gland nut **408** includes a shoulder **450** such that the opening at the first end **408A** is wider than the opening at the second end **408B.** The gland nut may be formed from a metal, such as aluminum, stainless steel, or brass.

The cable gland assembly **400** further includes a garter spring **452,** a sleeve **454,** a bushing **456,** and a washer **458** disposed within the internal passage of the gland nut **408.** The garter spring **452** is positioned between the second end **404B** of the intermediate body **404** and the sleeve **454.** The sleeve **454** is positioned between the garter spring **452** and the bushing **456.** The sleeve **454** is configured to engage the garter spring **452** and the bushing **456** such that the sleeve **454** axially compresses the garter spring **452** and the bushing **456.** The sleeve **454** may be comprised of or formed from, for example, plastic or metal, such as aluminum, stainless steel, or brass. The washer **458** is disposed between the bushing **456** and the shoulder **450** of the gland nut **408** proximate to the second end **408B** of the gland nut **408.** The washer **458** distributes the load applied by the shoulder **450** of the gland nut **408** when the cable gland assembly **400** is assembled. The washer **458** may be constructed of, for example, plastic, such as a polyamide.

When the cable gland assembly is assembled with a cable disposed therein, the garter spring **452** is compressed between the second end **405B** of the elbow body **405** and the sleeve **454.** When compressed, the garter spring **452** engages and surrounds a portion of the cable to create a grounding connection. Additionally, the garter spring **452** may be configured to act as an armor stop which limits the insertion of a cable jacket or a cable armor that surrounds the cable by stripping the cable jacket and the cable armor to expose the internal wires or cables. The garter spring **452** may be formed from metal, such as stainless steel with copper flash coating.

The cable gland assembly **400** is configured such that a portion of the cable remains secured in the intermediate body **404,** the elbow body **405,** and the gland nut **408** even when the union nut **406** is uncoupled form the hub body **402.** This allows the union nut **406** to uncouple from the cable gland assembly **400** without compromising the securement of the cable.

After the union nut **406** is uncoupled from the hub body **402,** then the intermediate body **404,** with the elbow body **405** threadedly engaged therein, can be removed from the internal passage of the hub body **402.** Once the intermediate body **404** is removed from the internal passage of the hub body **402,** an operator can apply the compound sealant or inspect previously applied compound sealant in the compound chamber **436.** Accordingly, an operator only needs to untorque the union nut **406** to remove the intermediate body **404** with threadedly engaged elbow body from the hub body **402** because the intermediate body **404** is retained in the hub body **402** without fasteners or threads.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative apparatus and method, and illustrative examples shown and described. Accordingly, departures may be made from such details without departing from the spirit or scope of the applicant's general inventive concept.

## Claims

1. A cable gland assembly comprising:
a hub body having a first end configured to threadedly couple to a structure and a second end opposite the first end, wherein an exterior portion of the second end of the hub body includes a multistart threaded portion, the hub body defining an internal passage;
an intermediate body extending along an axis, the intermediate body having a first end and a second end, the intermediate body defining an internal passage, the first end of the intermediate body is disposed within the internal passage of the hub body, the second end extending axially past the second end of the hub body, the second end further having a collar, the intermediate body having further having internal threads along a portion of the internal passage proximate to the second end of intermediate body;
an elbow body having a first end and a second end, the elbow body further having an angular bend disposed between the first end and second end of the elbow body, the elbow body defining an internal passage, the first end of the elbow body threadedly engages the internal threads of the intermediate body, the second end of the elbow body includes external threads;
a union nut having a first end and a second end opposite the first end, the union nut defining an internal passage that receives the first end of the intermediate body and the second end of the hub body, the first end of the union nut threadedly engages the multistart threaded portion of the hub body, the second end of the union nut having a shoulder that abuts against the intermediate body collar, wherein tightening the union nut along the multistart threaded portion of the hub body secures the intermediate body in the internal passage of the hub body; and
a gland nut having a first end and a second end opposite the first end, the gland nut defining an internal passage, the first end of the gland nut threadedly engages the external threads of the second end of the elbow body, the second end of the gland nut having a shoulder.

2. The cable gland assembly of claim 1, wherein the angular bend of the elbow body is an acute-angle bend.

3. The cable gland assembly of claim 1, wherein the angular bend of the elbow body is a right-angle bend.

4. The cable gland assembly of claim 1, wherein the angular bend of the elbow body is an obtuse-angle bend.

5. The cable gland assembly of claim 1, wherein the multistart threaded portions of the hub body and union nut tighten or loosen in one or fewer turns.

6. The cable gland assembly of claim 1, further comprising a bushing disposed within the gland nut, the bushing having a first end and a second end opposite the first end, wherein the second end of the bushing abuts the gland nut shoulder.

7. The cable gland assembly of claim 6, further comprising a washer disposed within the gland nut, the washer having a first side and a second side opposite the first side, wherein the second side of the washer abuts the second end of the bushing.

8. The cable gland assembly of claim 7, further comprising a garter spring disposed between the second end of the intermediate body and the first side of the washer, wherein the garter spring engages a portion of the cable to secure the cable within the cable gland assembly when the gland nut is tightened onto the intermediate body.

9. The cable gland assembly of claim 8, wherein the portion of the cable is secured in the cable gland assembly independently of the union nut.

10. The cable gland assembly of claim 1, wherein the intermediate body includes a compound chamber in the first end of the intermediate body for receiving a sealing compound.

11. A method of assembling a cable gland assembly, the method comprising:
providing a hub body having a first end configured to threadedly couple to a structure and a second end opposite the first end, wherein an exterior portion of the second end of the hub body includes a multistart threaded portion, the hub body defining an internal passage;
providing an intermediate body extending along an axis, the intermediate body having a first end and a second end, the second end further having a collar, the intermediate body having further having internal threads along a portion of the internal passage proximate to the second end of intermediate body, the intermediate body defining an internal passage;
inserting the first end of the intermediate body within the internal passage of the hub body, such that the second end of the intermediate body extends axially past the second end of the hub body,
providing an elbow body having a first end and a second end, the elbow body further having an angular bend disposed between the first end and second end of the elbow body, the second end of the elbow body includes external threads, the elbow body defining an internal passage,
threadedly engaging the first end of the elbow body with the internal threads of the intermediate body;
providing a union nut having a first end and a second end opposite the first end, the union nut defining an internal passage that receives the first end of the intermediate body and the second end of the hub body,
threadedly engaging the first end of the union nut with the multistart threaded portion of the hub body, such that a shoulder of the second end of the union nut abuts against the intermediate body collar, wherein tightening the union nut along the multistart threaded portion of the hub body secures the intermediate body in the internal passage of the hub body;
providing a gland nut having a first end and a second end opposite the first end, the second end of the gland nut having a shoulder, the gland nut defining an internal passage,
threadedly engaging the first end of the gland nut with the the external threads of the second end of the elbow body.

12. The method of claim 11, wherein the threadedly engaging of the first end of the union nut with the multistart threaded portions of the hub body includes turning the union nut one or fewer turns.

13. The method of claim 11, wherein the angular bend of the elbow body is an acute-angle bend.

14. The cable gland assembly of claim 11, wherein the angular bend of the elbow body is a right-angle bend.

15. The cable gland assembly of claim 11, wherein the angular bend of the elbow body is an obtuse-angle bend.
